# EUROPÄISCHE PATENTSCHRIFT

(11) **EP 0 864 044 B1**
(45) Veröffentlichungstag und Bekanntmachung des Hinweises auf die Patenterteilung: **31.07.2002**
(21) Anmeldenummer: 97942766.3
(22) Anmeldetag: 26.08.1997
(51) Int. Cl.: F02M 61/16, F02M 51/06

(54) **VENTIL UND VERFAHREN ZUR HERSTELLUNG EINES VENTILES**
VALVE AND METHOD FOR THE MANUFACTURE THEREOF
SOUPAPE ET PROCEDE DE PRODUCTION D'UNE SOUPAPE

(30) Priorität: 02.10.1996 DE 19640782
(43) Veröffentlichungstag der Anmeldung: 16.09.1998
(73) Patentinhaber: ROBERT BOSCH GMBH, 70442 Stuttgart (DE)
(72) Erfinder: STIER, Hubert, D-71701 Schwieberdingen (DE)
(86) Internationale Anmeldenummer: DE9701912
(87) Internationale Veröffentlichungsnummer: WO9814701

(56) Entgegenhaltungen:
- DE-A- 3 119 863
- DE-A- 4 431 128
- US-A- 3 608 171
- US-A- 5 158 236

## Beschreibung

### Stand der Technik

Die Erfindung geht aus von einem Ventil nach der Gattung des Anspruches 1 bzw. einem Verfahren zur Herstellung eines Ventiles nach der Gattung des Anspruches 6. Es ist schon ein Ventil bzw. ein Verfahren zur Herstellung eines Ventiles bekannt (EP 0 497 931 B1), bei dem zur Einstellung des Ventilnadelhubes der Lochkörper zwischen zwei Schweißnähten verformt wird, was zu einer Beschädigung der Schweißnähte und zu Verformungen am Ventilsitzkörper führen kann.

Bekannt ist durch die US-A-5 158 236 ein elektromagnetisch betätigbares Ventil, bei dem ein eingeschnürter Bereich des Sitzträgers direkt an dem Anker liegt und eine weitere Einschnürung die Beweglichkeit des Ankers beeinträchtigen würde.

### Vorteile der Erfindung

Das erfindungsgemäße Ventil mit den kennzeichnenden Merkmalen des Anspruches 1 bzw. das Verfahren zur Herstellung des Ventiles mit den kennzeichnenden Merkmalen des Anspruchs 6 hat demgegenüber den Vorteil, daß auf einfache Art und Weise der Hub der Ventilnadel einstellbar ist, ohne daß dabei die Gefahr einer unerwünschten Krafteinwirkung auf den Ventilsitzkörper besteht.

Durch die in den Unteransprüchen aufgeführten Maßnahmen sind vorteilhafte Weiterbildungen und Verbesserungen des in dem Anspruch 1 angegebenen Ventiles bzw. in dem Anspruch 6 angegebenen Verfahrens möglich.

Besonders vorteilhaft ist es, die wenigstens eine Einschnürung am Sitzträger so auszubilden, daß sie seinen Umfang vollständig umlaufend über 360° ausgebildet ist, so daß sich eine gleichmäßige Verformung des Sitzträgers ergibt. Vorteilhaft ist es ebenfalls, die Einschnürung mit einer gewölbten Kontur zu versehen, wodurch sich ein gleichmäßiger Spannungsverlauf ergibt.

Ebenfalls vorteilhaft ist es, das Verhältnis von Durchmesser zu Wandstärke des rohrförmigen Sitzträgers so zu wählen, daß durch die Bildung der wenigstens einen Einschnürung der sitzträger in axialer Richtung entlang der Ventillängsachse entweder verkürzt oder verlängert wird.

### Zeichnung

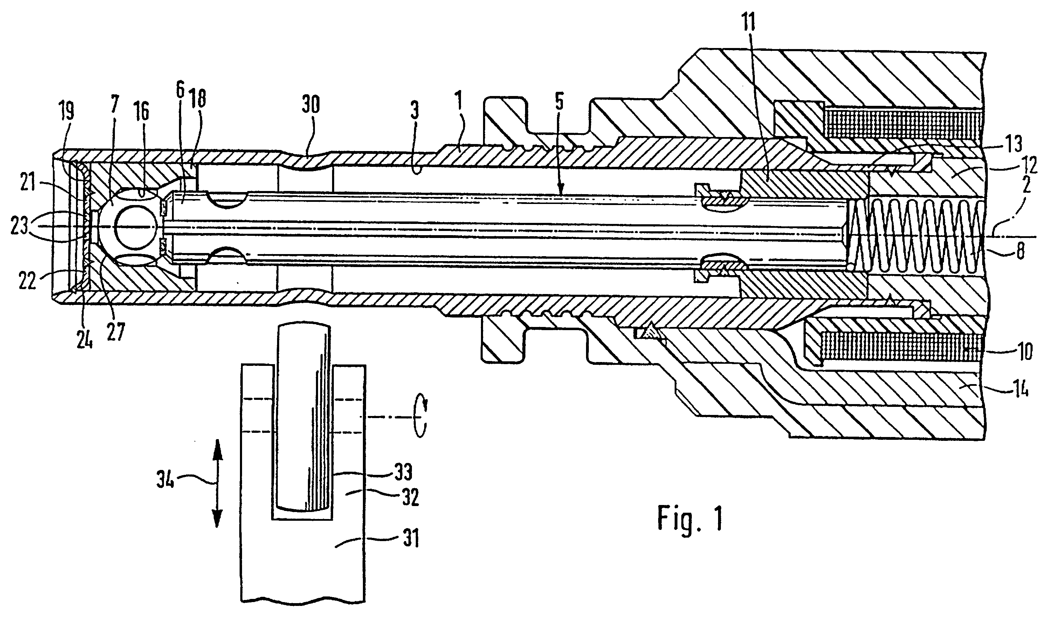

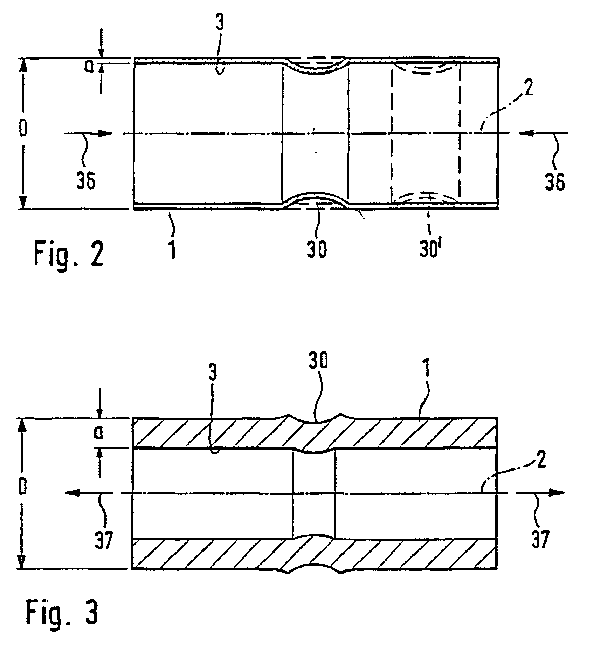

Ausführungsbeispiele der Erfindung sind in der Zeichnung vereinfacht dargestellt und in der nachfolgenden Beschreibung näher erläutert. Es zeigen Figur 1 ein erstes Ausführungsbeispiel eines erfindungsgemäß ausgebildeten Ventiles in Teildarstellung, Figur 2 eine Teildarstellung eines Sitzträgers entsprechend dem ersten Ausführungsbeispiel nach Figur 1, Figur 3 eine Teildarstellung eines Sitzträgers entsprechend einem zweiten Ausführungsbeispiel.

### Beschreibung der Ausführungsbeispiele

In der Figur 1 ist als Beispiel für ein Ventil ein sonst bereits bekanntes Brennstoffeinspritzventil für Brennstoffeinspritzanlagen von gemischverdichtenden fremdgezündeten Brennkraftmaschinen teilweise dargestellt, das als erstes Ausführungsbeispiel erfindungsgemäß ausgebildet ist. Das Brennstoffeinspritzventil hat zur Bildung eines Ventilgehäuses einen rohrförmigen Sitzträger 1, in dem konzentrisch zu einer Ventillängsachse 2 eine Längsöffnung 3 ausgebildet ist. In der Längsöffnung 3 ist eine z. B. rohrförmige Ventilnadel 5 angeordnet, die an ihrem stromabwärtigen Ende 6 mit einem kugelförmigen Ventilschließkörper 7 verbunden ist. Die Betätigung des Brennstoffeinspritzventils erfolgt in bekannter Weise beispielsweise elektromagnetisch. Zur axialen Bewegung der Ventilnadel 5 und damit zum öffnen entgegen der Federkraft einer Rückstellfeder 8 bzw. Schließen des Brennstoffeinspritzventils dient ein elektromagnetischer Kreis mit einer Magnetspule 10, einem Anker 11 und einem Kern 12. Der Anker 11 ist mit dem dem Ventilschließkörper 7 abgewandten Ende der Ventilnadel 5 verbunden, z. B. durch eine Schweißnaht, und auf den Kern 12 ausgerichtet. Der Sitzträger 1 ist an seinem dem Kern 12 zugewandten Ende mit einem Verbindungsabschnitt 13 dünner Wandstärke versehen, in den der Kern 12 teilweise ragt und mit dem der Kern 12 dicht verbunden ist, beispielsweise durch eine Schweißnaht. Der Verbindungsabschnitt 13 stellt für die magnetischen Feldlinien einen hohen magnetischen Widerstand dar, so daß die magnetischen Feldlinien von dem aus ferromagnetischem Material gefertigten Sitzträger 1 an dem Verbindungsabschnitt 13 vorbei zum Anker 11 und von diesem zum ebenfalls aus ferromagnetischem Material gefertigten Kern 12 verlaufen. Der magnetische Kreis wird beispielsweise durch einen Bügel 14 aus ferromagnetischem Material geschlossen, der in axialer Richtung die Magnetspule 10 außen übergreift, sich wenigstens teilweise in Umfangsrichtung erstreckt und mit dem Kern 12 und dem Sitzträger 1 verbunden ist.

Zur Führung des Ventilschließkörpers 7 während der Axialbewegung dient eine Führungsöffnung 16 eines Ventilsitzkörpers 18, der in die Längsöffnung 3 des Sitzträgers 1 eingeschoben ist. An seiner einen, dem Ventilschließkörper 7 abgewandten Stirnseite 19 ist der Ventilsitzkörper 18 mit einem Bodenteil 21 eines Lochkörpers 22 konzentrisch und fest durch eine umlaufende und dichte Schweißnaht verbunden. Im Bodenteil 21 des Lochkörpers 22 ist wenigstens eine Abspritzöffnung 23, beispielsweise sind vier Abspritzöffnungen 23 ausgeformt, über die bei geöffnetem Ventil Brennstoff beispielsweise in das Luftansaugrohr der Brennkraftmaschine abgespritzt wird. Der Lochkörper 22 weist eine topfförmige Querschnittsform mit einem sich an das Bodenteil 21 anschließenden umlaufenden Halterand 24 auf, der sich in axialer Richtung dem Ventilsitzkörper 18 abgewandt erstreckt und konisch nach außen gebogen ist, wo er an der Längsöffnung 3 des Sitzträgers 1 anliegt und mit einer umlaufenden dichten Schweißnaht mit dem Sitzträger 1 verschweißt ist.

Die Einschubtiefe des Ventilsitzkörpers 18 in die Längsöffnung 3 des Sitzträgers 1 bestimmt die Voreinstellung des Hubes der Ventilnadel 5, da die eine Endstellung der Ventilnadel 5 bei nicht erregter Magnetspule 10 durch die Anlage des Ventilschließkörpers 7 an einer Ventilsitzfläche 27 des Ventilsitzkörpers 18 festgelegt ist. Die andere Endstellung der Ventilnadel 5 wird bei erregter Magnetspule 10 beispielsweise durch die Anlage des Ankers 11 am Kern 12 festgelegt. Der axiale Weg entlang der Ventillängsachse 2 zwischen diesen beiden Endstellungen der Ventilnadel stellt den Hub dar.

Zur genauen Einstellung des Hubes der Ventilnadel 5 wird der Umfang des Sitzträgers 1 durch eine plastische Verformung mit wenigstens einer Einschnürung 30 versehen, die sich radial vom Umfang zur Längsöffnung 3 hin erstreckt. Hierzu wird zunächst in bekannter Weise eine Messung der statischen, während des statischen Öffnungszustandes des Ventiles abgegebenen Brennstoffmenge als Istmenge vorgenommen. Diese Istmenge wird mit einer vorgegebenen Sollmenge des abzuspritzenden Brennstoffes in einem Rechner verglichen und daraus ein Sollhub der Ventilnadel 5 bestimmt. Bei einer anderen Einstellmethode wird mittels eines Wegmeßgerätes der tatsächliche Isthub der Ventilnadel 5 gemessen und in einem Rechner mit dem vorgegebenen Sollhub verglichen. Aufgrund des vom Rechner ermittelten Unterschiedes zwischen dem Isthub und dem Sollhub der Ventilnadel 5 wird ein Steuersignal erzeugt, das zur Betätigung eines Einschnürungswerkzeuges 31 dient. Das Einschnürungswerkzeug 31 wird mittels einer nicht dargestellten Betätigungseinrichtung derart in eine Stellung zum Sitzträger 1 gebracht, daß es den Umfang des Sitzträgers 1 so weit plastisch zur Bildung der Einschnürung 30 zur Längsöffnung 3 hin verformt, daß sich die Länge des Sitzträgers in axialer Richtung entlang der Ventillängsachse 2 und damit der axiale Abstand zwischen der Ventilsitzfläche 27 und dem Kern 12 so verändert, daß der tatsächliche Hub (Isthub) der Ventilnadel 5 dem Sollhub entspricht. Die Einschnürung 30 kann beispielsweise dadurch erzeugt werden, daß das Einschnürungswerkzeug 31 in einer gabelförmigen Klaue 32 einen darin drehbar gelagerten Walzenkörper 33 aufweist, der entlang des Doppelpfeiles 34 etwa senkrecht zur Ventillängsachse 2 auf den Sitzträger 1 zu oder von diesem weg bewegbar ist. Im Ausführungsbeispiel hat der Walzenkörper 33 einen gewölbten, kreisförmigen Umfang, mit dem er in den Umfang des Sitzträgers 1 eine gewölbte, kreisförmige Einschnürung 30 eindrückt. Hierzu kann das Ventil in nicht dargestellter Weise in seiner Lage fixiert sein, und das Einschnürungswerkzeug 31 wird in Richtung des Doppelpfeils 34 auf den Sitzträger 1 zubewegt und umkreist den sitzträger 1 zur Erzeugung der wenigstens einen Einschnürung 30. In gleicher Weise kann jedoch auch das Einschnürungswerkzeug 31 fixiert sein, und das Ventil wird angesteuert durch das vom Rechner ermittelte Signal auf das Einschnürungswerkzeug 31 zubewegt und in eine Rotationsbewegung versetzt. Möglich ist ebenfalls, daß sowohl das Ventil als auch das Einschnürungswerkzeug 31 aufeinander zubewegt und beide in Rotation versetzt werden. Die Kontur der Einschnürung 30 kann auch eine andere Form als die gewölbte, kreisförmige haben, beispielsweise eine dreieckförmige oder rechteckförmige oder ähnliche Kontur. Hierzu ist dann z. B. der Walzenkörper 33 statt mit einer gewölbten Kontur mit einer rechteckförmigen oder einer dreieckförmigen oder ähnlichen Kontur versehen. Die bisher beschriebene Form der Einschnürung 30 ist am Umfang des Sitzträgers 1 umlaufend über 360° ausgebildet. Zur Veränderung der axialen Länge entlang der Ventillängsachse 2 des Sitzträgers 1 bzw. der Längsöffnung 3 ist es jedoch auch möglich, die Einschnürung 30 nicht vollständig über 360° umlaufend auszubilden, sondern nur in Segmenten über den Umfang verteilt vorzusehen, so daß zwischen den einzelnen Segmenten der Einschnürung 30 in Umfangsrichtung kleinere unverformte Bereiche der Wandung des Sitzträgers liegen. So kann die Einschnürung 30 beispielsweise aus drei oder mehr Segmenten gebildet werden, die in Umfangsrichtung gleichmäßig zueinander verteilt sind. Außerdem können mit axialem Abstand zueinander am Umfang des Sitzträgers 1 auch zwei und mehr Einschnürungen 30 vorgesehen sein.

In der Figur 2 ist ein dem Sitzträger 1 nach Figur 1 entsprechender Sitzträger in Teildarstellung gezeigt, der eine Einschnürung 30 hat, zu der gestrichelt dargestellt eine zweite Einschnürung 30' mit axialem Abstand dazu vorgesehen ist. Ist der Sitzträger 1 so ausgebildet, daß sein Durchmesser D im Verhältnis zur Wandstärke a des rohrförmigen Sitzträgers 1 groß ist, so verkürzt sich die Länge des Sitzträgers 1 in axialer Richtung entlang der Ventillängsachse 2 entsprechend der Pfeile 36, wodurch der Hub der Ventilnadel 5 verringert wird. Wird im Gegensatz dazu das Verhältnis des Außendurchmessers D des Sitzträgers 1 zur Wandstärke a des Sitzträgers klein gewählt, so ergibt sich bei der Herstellung der Einschnürung 30 eine Verlängerung des Sitzträgers 1 bzw. der Längsöffnung 3 entlang der Ventillängsachse 2 in Richtung der Pfeile 37 und damit eine Vergrößerung des Hubes der Ventilnadel. Beispielsweise ergibt sich für einen rostfreien Stahl (V2A) etwa für ein Verhältnis von Außendurchmesser D des Sitzträgers 1 zur Wandstärke a von > 25:1 eine Verkürzung des Sitzträgers 1 entsprechend der Darstellung in Figur 2 und für ein Verhältnis von < 25:1 eine Verlängerung des Sitzträgers 1 entsprechend der Darstellung in Figur 3.

## Patentansprüche

1. Ventil, insbesondere Brennstoffeinspritzventil für Brennkraftmaschinen, mit einer Magnetspule (10), mit einem Kern (12), mit einer bewegbaren Ventilnadel (5), die mit einem Anker (11) verbunden ist, mit einem mit einem rohrförmigen Sitzträger (1) verbundenen Ventilsitzkörper (18), der eine mit der Ventilnadel (5) zusammenwirkende Ventilsitzfläche (27) hat, und mit einer konzentrisch zu einer Ventillängsachse (2) verlaufenden Längsöffnung (3) im Sitzträger (1), in die die Ventilnadel (5) und der Anker (11) ragen, **dadurch gekennzeichnet, daß** am Umfang des Sitzträgers (1) in einem Abschnitt des Sitzträgers (1) zwischen dem Anker (11) und dem Ventilsitzkörper (18) nach dem Zusammenbau des Ventils zur Änderung eines Hubes der Ventilnadel (5) wenigstens eine durch plastische Verformung gebildete und sich radial zur Längsöffnung (3) hin erstreckende Einschnürung (30, 30') vorgesehen ist.

2. Ventil nach Anspruch 1, **dadurch gekennzeichnet, daß** die wenigstens eine Einschnürung (30, 30') an dem Sitzträger (1) umlaufend ausgebildet ist.

3. Ventil nach Anspruch 1 oder 2, **dadurch gekennzeichnet, daß** die wenigstens eine Einschnürung (30, 30') eine gewölbte Kontur hat.

4. Ventil nach Anspruch 1 oder 2, **dadurch gekennzeichnet, daß** die wenigstens eine Einschnürung (30, 30') eine rechteckige Kontur hat.

5. Ventil nach Anspruch 1 oder 2, **dadurch gekennzeichnet, daß** die wenigstens eine Einschnürung (30, 30') eine dreieckige Kontur hat.

6. Verfahren zur Herstellung eines Ventiles, insbesondere eines Brennstoffeinspritzventiles für Brennkraftmaschinen, mit einer Magnetspule (10), mit einem Kern (12), mit einer bewegbaren Ventilnadel (5), die mit einem Anker (11) verbunden ist, mit einem mit einem rohrförmigen Sitzträger (1) verbundenen Ventilsitzkörper (18), der eine mit der Ventilnadel (5) zusammenwirkende Ventilsitzfläche (27) hat, und mit einer konzentrisch zu einer Ventillängsachse (2) verlaufenden Längsöffnung (3) im Sitzträger (1), in die die Ventilnadel (5) und der Anker (11) ragen, und darin zwischen einer Ventilschließstellung und einer Ventiloffenstellung einen Hub ausführen, **dadurch gekennzeichnet, daß** nach dem Zusammenbau des Ventils zur Änderung des Hubes der Ventilnadel (5) der Umfang des Sitzträgers (1) in einem Abschnitt des Sitzträgers (1) zwischen dem Anker (11) und dem Ventilsitzkörper (18) in radialer Richtung zur Längsöffnung (3) hin in Form wenigstens einer Einschnürung (30, 30') plastisch verformt wird.

7. Verfahren nach Anspruch 6, **dadurch gekennzeichnet, daß** die wenigstens eine Einschnürung (30, 30') am Sitzträger (1) umlaufend ausgebildet wird.

8. Verfahren nach Anspruch 6 oder 7, **dadurch gekennzeichnet, daß** das Verhältnis von Außendurchmesser (D) zu Wandstärke (a) des rohrförmigen Sitzträgers (1) so gewählt wird, daß der Sitzträger (1) durch die Bildung der wenigstens einen Einschnürung (30, 30') in axialer Richtung entlang der Ventillängsachse (2) verkürzt wird.

9. Verfahren nach Anspruch 6 oder 7, **dadurch gekennzeichnet, daß** das Verhältnis von Außendurchmesser (D) zu Wandstärke (a) des rohrförmigen Sitzträgers (1) so gewählt wird, daß der Sitzträger (1) durch die Bildung der wenigstens einen Einschnürung (30, 30') in axialer Richtung entlang der Ventillängsachse (2) verlängert wird.

## Claims

1. Valve, in particular fuel injection valve for internal combustion engines, with a magnet coil (10), with a core (12), with a movable valve needle (5) which is connected to an armature (11), with a valve-seat body (18) which is connected to a tubular seat carrier (1) and has a valve-seat surface (27) cooperating with the valve needle (5), and with, in the seat carrier (1), a longitudinal orifice (3) which runs concentrically to a valve longitudinal axis (2) and into which the valve needle (5) and the armature (11) project, **characterized in that**, after the assembly of the valve, in order to change a stroke of the valve needle (5), at least one contraction (30, 30') formed by plastic deformation and extending radially relative to the longitudinal orifice (3) is provided on the circumference of the seat carrier (1) in a portion of the seat carrier (1) between the armature (11) and the valve-seat body (18).

2. Valve according to Claim 1, **characterized in that** the at least one contraction (30, 30') is formed continuously on the seat carrier (1).

3. Valve according to Claim 1 or 2, **characterized in that** the at least one contraction (30, 30') has a curved contour.

4. Valve according to Claim 1 or 2, **characterized in that** the at least one contraction (30, 30') has a rectangular contour.

5. Valve according to Claim 1 or 2, **characterized in that** the at least one contraction (30, 30') has a triangular contour.

6. Method for producing a valve, in particular a fuel injection valve for internal combustion engines, with a magnet coil (10), with a core (12), with a movable valve needle (5) which is connected to an armature (11), with a valve-seat body (18) which is connected to a tubular seat carrier (1) and has a valve-seat surface (27) cooperating with the valve needle (5), and with, in the seat carrier (1), a longitudinal orifice (3) which runs concentrically to a valve longitudinal axis (2) and into which the valve needle (5) and the armature (11) project and in said longitudinal orifice execute a stroke between a valve-closing position and a valve-open position, **characterized in that**, after the assembly of the valve, in order to change the stroke of the valve needle (5), the circumference of the seat carrier (1) in a portion of the seat carrier (1) between the armature (11) and the valve-seat body (18) is deformed plastically, in the radial direction relative to the longitudinal orifice (3), in the form of at least one contraction (30, 30').

7. Method according to Claim 6, **characterized in that** the at least one contraction (30, 30') is formed continuously on the seat carrier (1).

8. Method according to Claim 6 or 7, **characterized in that** the ratio of the outside diameter (D) to the wall thickness (a) of the tubular seat carrier (1) is selected such that the seat carrier (1) is shortened in the axial direction along the valve longitudinal axis (2) as a result of the formation of the at least one contraction (30, 30').

9. Method according to Claim 6 or 7, **characterized in that** the ratio of the outside diameter (D) to the wall thickness (a) of the tubular seat carrier (1) is selected such that the seat carrier (1) is lengthened in the axial direction along the valve longitudinal axis (2) as a result of the formation of the at least one contraction (30, 30').

## Revendications

1. Soupape, notamment injecteur de carburant pour un moteur à combustion interne, comprenant une bobine électromagnétique (10) avec un noyau (12), une aiguille d'injecteur (5), mobile, reliée à un induit (11) et un corps formant siège de soupape (18) relié à un support de siège (1), tubulaire, ce corps ayant une surface de siège de soupape (27) coopérant avec l'aiguille (5), le support de siège (1) ayant un orifice longitudinal (3) concentrique à l'axe longitudinal (2) de l'injecteur, cet orifice recevant l'aiguille (5) et l'induit (11),
**caractérisée en ce que**
à la périphérie du support de siège (1), dans un segment de ce support (1) entre l'induit (11) et le corps formant siège de soupape (18), après le montage de la soupape (injecteur), pour modifier la course de l'aiguille (5), on réalise au moins un rétrécissement (30, 30') pour modifier la course de l'aiguille d'injecteur (5) par déformation plastique, ce rétrécissement s'étendant radialement par rapport à l'orifice longitudinal (3).

2. Soupape selon la revendication 1,
**caractérisée en ce qu'**
au moins un rétrécissement (30, 30') est réalisé de manière périphérique dans le support formant siège (1).

3. Soupape selon la revendication 1 ou 2,
**caractérisée en ce que**
le rétrécissement (30, 30') a un contour bombé.

4. Soupape selon la revendication 1 ou 2,
**caractérisée en ce que**
le rétrécissement (30, 30') a un contour rectangulaire.

5. Soupape selon la revendication 1 ou 2,
**caractérisée en ce que**
le rétrécissement (30, 30') a un contour triangulaire.

6. Procédé de fabrication d'une soupape, notamment d'un injecteur de carburant pour un moteur à combustion interne, comprenant une bobine électromagnétique (10) avec un noyau (12), une aiguille d'injecteur (5), mobile, dans le noyau, cette aiguille étant reliée à un induit (11), au moins un corps formant siège de soupape (18) relié à un support de siège (1) tubulaire, qui possède une surface formant siège de soupape (27) avec laquelle coopère l'aiguille (5), le support de siège (1) comportant un orifice longitudinal (3), concentrique à l'axe longitudinal (2) de l'injecteur qui reçoit l'aiguille (5) et l'induit (11) pour effectuer une course entre une position de fermeture de la soupape et une position d'ouverture de la soupape,
**caractérisé en ce que**
après le montage de la soupape, pour modifier la course de l'aiguille (5), on déforme la périphérie du support de siège (1) dans un segment du support (1) compris entre l'induit (11) et le corps formant siège de soupape (18), dans la direction radiale par rapport à l'orifice longitudinal (3), sous la forme d'au moins un rétrécissement (30, 30') obtenu par déformation plastique.

7. Procédé selon la revendication 6,
**caractérisé en ce qu'**
on réalise au moins un rétrécissement (30, 30') dans le support de siège (1) selon une réalisation périphérique.

8. Procédé selon la revendication 6 ou 7,
**caractérisé en ce que**
le rapport entre le diamètre extérieur (D) et l'épaisseur de paroi (a) du support de siège (1), tubulaire, est choisi pour que le support de siège (1) soit raccourci par la formation d'au moins une partie rétrécie (30, 30') dans la direction axiale, le long de l'axe longitudinal (2) de la soupape.

9. Procédé selon la revendication 6 ou 7,
**caractérisé en ce que**
le rapport du diamètre extérieur (D) à l'épaisseur de paroi (a) du support de siège (1), tubulaire, est choisi pour que le support (1), après formation d'au moins une partie rétrécie (30, 30'), s'allonge dans la direction axiale, le long de l'axe longitudinal (2) de la soupape.
